(19) Europäisches Patentamt

European Patent Office

Office européen des brevets

(11) **EP 0 849 620 B1**

(12) **FASCICULE DE BREVET EUROPEEN**

(45) Date de publication et mention
de la délivrance du brevet:
**08.09.2004   Bulletin 2004/37**

(51) Int Cl.7: **G02F 1/03**

(21) Numéro de dépôt: **97403092.6**

(22) Date de dépôt: **19.12.1997**

(54) **Modulateur électrooptique de faisceau lumineux**

Elektrooptischer Lichtmodulator

Light beam electrooptical modulator

(84) Etats contractants désignés:
**DE GB IT**

(30) Priorité: **20.12.1996   FR 9615741**

(43) Date de publication de la demande:
**24.06.1998   Bulletin 1998/26**

(73) Titulaire: **Thales**
**75008 Paris (FR)**

(72) Inventeurs:
• **Merlet, Thomas**
**94117 Arcueil Cedex (FR)**
• **Dolfi, Daniel**
**94117 Arcueil Cedex (FR)**
• **Huignard, Jean-Pierre**
**94117 Arcueil Cedex (FR)**

(56) Documents cités:
• **ENDO M ET AL: "A travelling-wave velocity-matched wideband laser beam modulator" JAPANESE JOURNAL OF APPLIED PHYSICS, PART 1 (REGULAR PAPERS & SHORT NOTES), MAY 1995, JAPAN, vol. 34, no. 5A, ISSN 0021-4922, pages 2335-2337, XP002039229**
• **ARMENISE M N ET AL: "Traveling-wave electrooptical modulator in inhomogeneous lithium niobate" ALTA FREQUENZA, vol. 52, no. 3, mai 1983, ITALY, pages 212-214, XP002039230**

**Description**

L'invention concerne un modulateur électrooptique de faisceau lumineux. En réalisant la propagation synchrone d'une onde optique incidente et d'un signal électrique le long d'un guide, ce modulateur offre un volume d'interaction important. Ce dernier permet la modulation d'une porteuse optique de forte puissance.

La maturité des composants optoélectroniques permet aujourd'hui d'envisager l'insertion de liaisons optiques dans des systèmes électroniques. Cette insertion sera d'autant plus favorisée si la chaîne optique utilise pleinement la puissance des sources lasers disponibles. Cela est souvent nécessaire dans les télécommunications pour les transmissions haut débit d'un grand nombre d'informations jusqu'à 10 Gbits/s. Or la plupart des modulateurs développés à ce jour n'autorisent qu'au maximum 100 mW de puissance optique incidente. Pour des densités de puissance supérieures, l'effet photoréfractif devient prépondérant devant l'effet électrooptique. Ainsi, les modulateurs apportent une limitation à la dynamique et l'efficacité de la liaison optique.

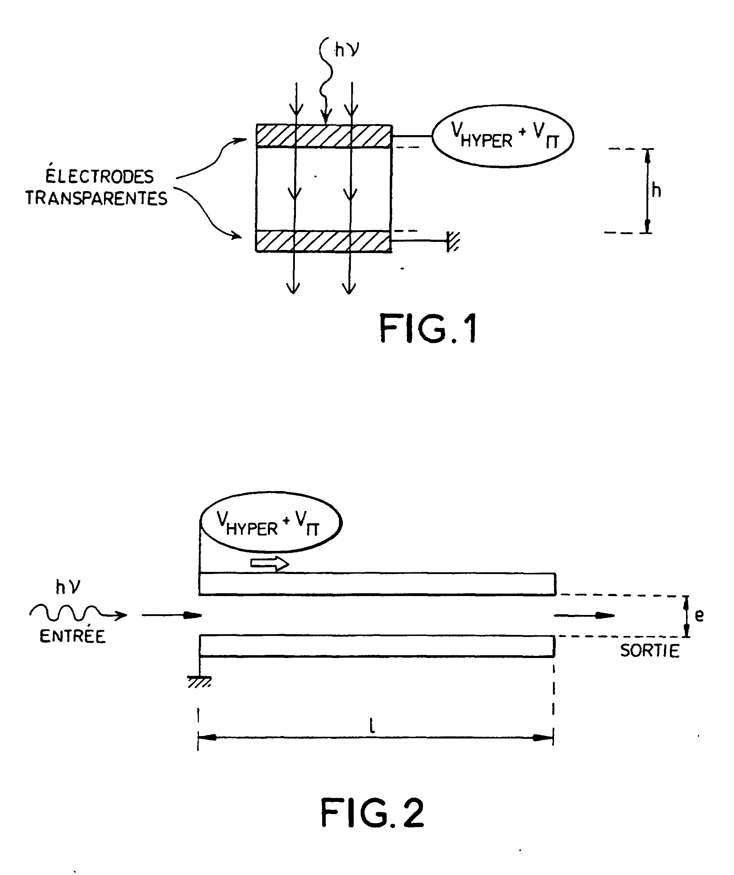

Les modulateurs classiques utilisent l'effet Franz Keldysh en électro-absorption ou en électro-réfraction (voir référence [1] en fin de description). Dans le cas de l'électro-réfraction (modulation de phase), on réalise une modulation d'amplitude en adoptant une configuration de type interféromètre de Mach-Zender. Ces modulateurs peuvent être utilisés en configuration "transparente" comme cela est schématisé par la figure 1, ou bien en configuration de guide d'onde comme cela est schématisé en figure 2.

Dans le premier cas, la hauteur inter-électrode h (figure 1) est limitée par l'absorption optique dans le matériau d'une part et d'autre part par la tension de commande $V_\pi$ qui devient d'autant plus élevée que h est grand. Ceci entraîne aux fréquences élevées une limitation sur la section des électrodes du fait de l'effet capacitif. Ainsi, le volume d'interaction du modulateur est réduit, n'autorisant pas l'incidence de puissance optique élevée.

En ce qui concerne le deuxième cas (figure 2), la longueur I du guide d'onde résulte d'un compromis entre l'efficacité de modulation et la bande passante ainsi que les pertes hyperfréquences et optiques (voir référence [2] en fin de description. La largeur e du guide reste limitée afin de conserver des tensions de commande $V_\pi$ faibles. Aussi, le guide optique, parallèle au guide hyperfréquence, présente une section étroite, et de nouveau n'autorise pas l'incidence de puissances optiques élevées. Afin de lever cette difficulté et de tirer parti d'un volume d'interaction important, on propose une structure dans laquelle les guides optiques et hyperfréquences sont transverses. Le synchronisme des deux ondes est assuré grâce à un dispositif équilibrant les retards entre les deux ondes tel qu'un composant holographique diffractif.

L'invention concerne donc un modulateur électrooptique de faisceau lumineux, caractérisé en ce qu'il comprend :

- un élément en matériau électrooptique comportant deux électrodes définissant dans le matériau électrooptique une zone déterminant un guide d'onde hyperfréquence orienté selon une direction déterminée;

- des moyens pour transmettre un faisceau lumineux incident dans ladite zone selon une ligne ou bande parallèle à ladite direction c'est à dire tels que le faisceau lumineux se propage dans une direction transverse à la direction déterminée;

- des moyens de compensation situés sur le trajet du faisceau lumineux pour compenser les retards de modulation contenus dans le faisceau lumineux par des différences de longueurs de trajets optiques.

Les différents objets et caractéristiques de l'invention apparaîtront plus clairement dans la description qui va suivre et dans les figures annexées qui représentent:

- les figures 1 et 2, des dispositifs connus dans la technique et décrits précédemment ;
- les figures 3a et 3b, un exemple de réalisation du dispositif selon l'invention dans lequel le dispositif est coplanaire ;
- la figure 4, un schéma explicatif de fonctionnement du dispositif des figures 3a, 3b ;
- les figures 5a et 5b, une variante de réalisation du dispositif de la figure 3 ;
- la figure 6, un exemple de réalisation du dispositif de l'invention fonctionnant à plusieurs longueurs d'ondes ;
- les figures 7a à 7c, un exemple de réalisation du dispositif de l'invention dans lequel les électrodes sont de part et d'autre du milieu électrooptique ;
- les figures 8a et 8b, des schémas comparant le fonctionnement des dispositifs des figures 3 et 7a ;
- les figures 9 et 10, des variantes de réalisation du dispositif de la figure 7a ;
- la figure 11, un laser appliquant le dispositif de modulation selon l'invention.

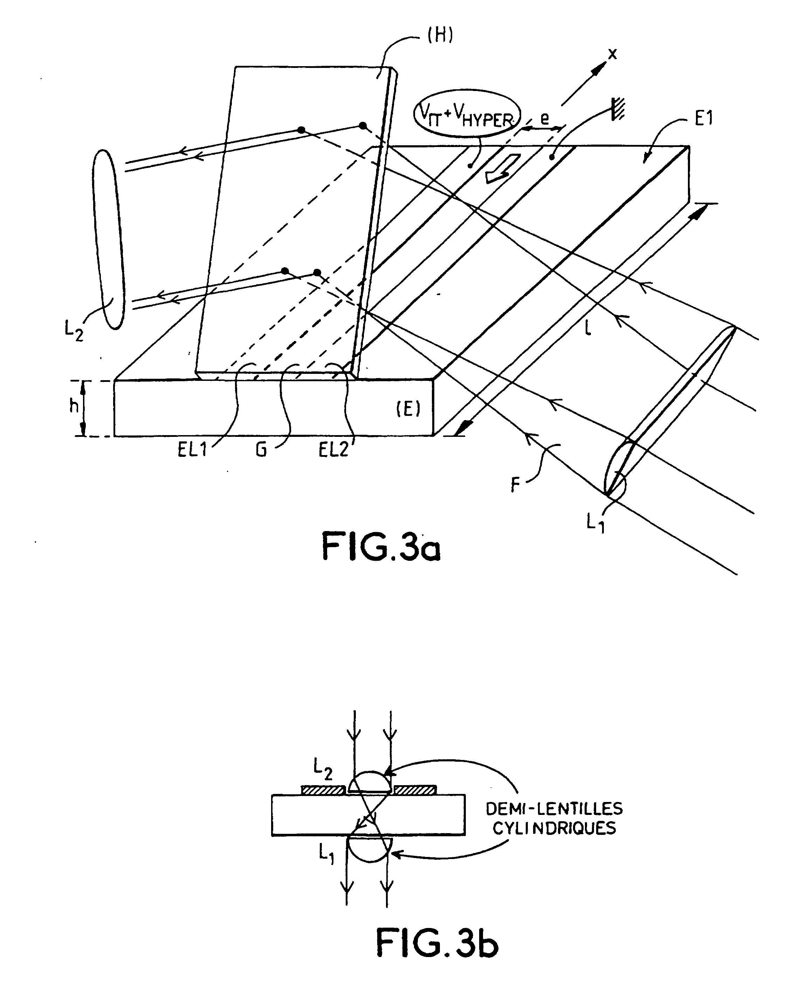

En se reportant à la figure 3a, on va donc tout d'abord décrire un exemple de réalisation du dispositif de l'invention. Ce dispositif comporte un élément E en matériau électrooptique c'est-à-dire un matériau dont l'indice de réfraction optique varie sous l'effet d'un champ électrique. La face E1 de l'élément E comporte deux électrodes conductrices EL1 et EL2 de forme allongée, séparées par une zone G de largeur e. Cette zone définira pour la suite de la description un guide d'onde électrique tel qu'un guide d'onde hyperfréquence. A une extrémité des électrodes EL1, EL2 est connectée une source de courant modulée. L'une des électrodes est à la masse et l'autre électrode reçoit un potentiel $V_\pi$ constant modulé par un signal $V_{hyper}$.

Le guide G est éclairé par un faisceau lumineux F de longueur d'onde $\lambda$. Ce faisceau lumineux est focalisé par une lentille cylindrique L1 de telle façon que l'éclairement du guide G se fasse selon une ligne (ou une bande) orientée selon l'axe du guide G.

Le faisceau F est destiné à traverser le guide G. Un dispositif holographique (ou un réseau de diffraction en relief) est associé au guide G pour recevoir le faisceau F après sa traversée du guide G.

La focalisation de la lumière dans le guide G peut s'effectuer soit par un système de deux demi-lentilles cylindriques juxtaposées au guide (figure 3b), soit par deux lentilles (cylindriques par exemple) qui transforment un faisceau incident circulaire en un faisceau ligne au niveau du guide G.

L'élément en matériau éléectrooptique E peut être un semiconducteur électrooptique tel l'AsGa mais également une céramique de type PLZT (fort indice) ou un polymère électrooptique (faible indice). Les céramiques et les polymères présentent l'avantage d'un coefficient électrooptique élevé autorisant des tensions de commandes faibles ainsi que de faibles épaisseurs de substrats ($\approx 5\ \mu m$).

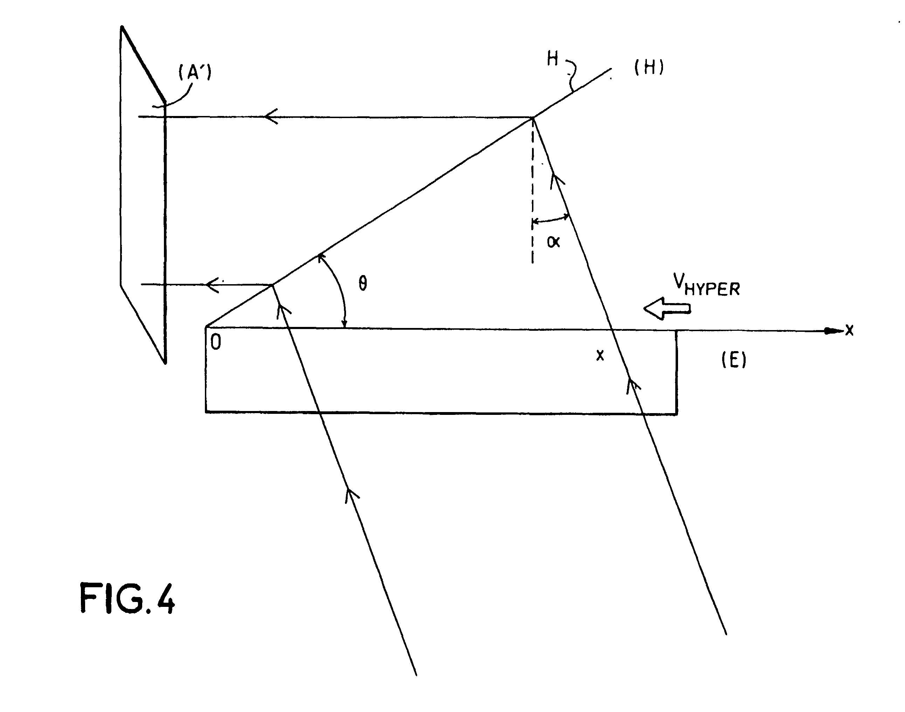

En se reportant à la figure 4, on va maintenant décrire le fonctionnement du dispositif de la figure 3a.

Comme on l'a mentionné, la source de tension est connectée à une extrémité des électrodes. Celles-ci sont orientées selon un axe x. Selon la figure 4, lorsqu'on applique une tension aux électrodes, un potentiel parcourt ces électrodes selon le sens inverse de l'axe x.

Chaque fraction du faisceau lumineux transmise à une abscisse x à l'instant t est modulée pour le signal $V_{hyper}$ (x, t). Du fait de la propagation du signal $V_{hyper}$ le long des électrodes EL1, EL2, le faisceau lumineux qui éclaire le guide G selon la direction de ce guide (selon l'axe x) est progressivement modulé dans le temps par le signal $V_{hyper}$ (x, t). Après la traversée du matériau électrooptique E dans l'espace inter-électrode (guide G), l'ensemble des ondes élémentaires modulées est progressivement diffracté par le composant holographique H, utilisé en transmission. Si l'on veut récupérer en sortie, dans le plan A' une onde uniformément modulée, il faut que les trajets optique et hyperfréquence se compensent lorsque les deux ondes interagissent. En prenant comme référence le point 0 (figure 4), le trajet hyperfréquence $L_{hyper}$ à la distance x du point 0

$$L_{hyper} = n_{hyper}\ x$$

où $n_{hyper}$ représente l'indice hyperfréquence du milieu. Par ailleurs, le trajet optique vaut, compte tenu de l'inclinaison $\theta$ du composant holographique H et de l'angle de diffraction $\alpha$ :

$$L_{opt} = n_{opt} \times \frac{1 + \dfrac{\tan\theta}{\cos\alpha}}{1 + \tan\theta\ \tan\alpha}$$

On doit donc en égalant ces deux trajets, respecter la condition:

$$n_{hyper}\ (1 + \tan\theta\ \tan\alpha) = n_{opt}\ (1 + \tan\theta/\cos\alpha)$$

On remarque que dans ce modulateur la lumière peut emprunter le chemin inverse. Il est toutefois préférable d'utiliser le sens direct car le composant holographique H filtre les éventuelles erreurs de phase survenues lors de la modulation en ne reconstruisant, dans la direction de diffraction souhaitée, qu'un faisceau uniformément modulé.

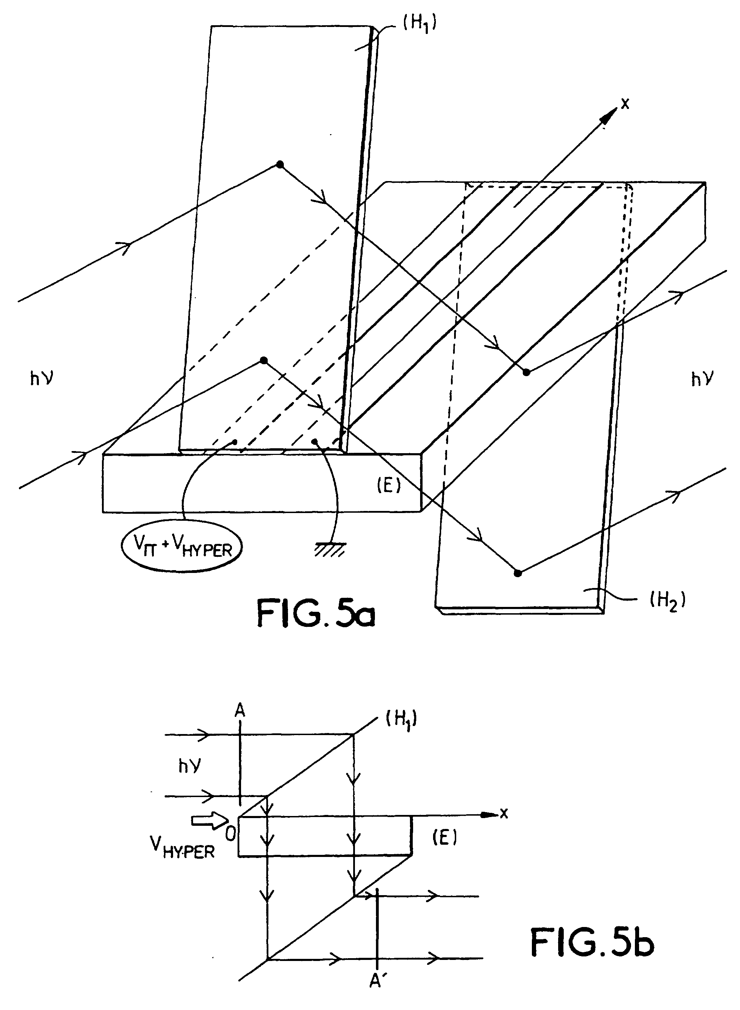

Si la longueur de cohérence du faisceau laser incident est insuffisante pour obtenir dans le plan A' (figure 4) une onde cohérente uniformément modulée, on peut employer un montage similaire utilisant deux composants holographiques $H_1$ et $H_2$ identiques (figures 5a et 5b). Dans ce cas (figure 5b), une onde plane incidente dans le plan A se retrouve uniformément modulée en sortie du modulateur en onde plane dans le plan A', le faisceau conservant sa direction incidente. On note dans les schémas présentés en figures 5a et 5b que dans ce cas de figure, la propagation du signal hyperfréquence $V_{hyper}$ s'effectue selon les x croissants.

Les dispositifs des figures 3a et 5a peuvent être réalisés de la manière suivante. Sur une couche de semiconducteurs AsGa de hauteur h (figure 3a) épitaxiée à partir d'un substrat InP non représenté, on dépose des électrodes en Ti/Au réalisant une structure de type MSM (Metal-Semiconducteur-Metal). Une recharge électrolytique permet d'atteindre des épaisseurs d'électrodes de 5 $\mu m$ minimisant ainsi les pertes ohmiques par effet de peau. A titre d'exemple, pour un fonctionnement à 2 GHz, l'écartement e des électrodes (figure 3a) vaut 16 $\mu m$ et la longueur du dispositif environ 3 cm. Par des procédés classiques d'holographie sur des matériaux photopolymères, on obtient des réseaux diffractifs dont le rendement est supérieur à 90 %. Des réseaux à rendement de diffraction équivalent, de type réseau blasé en transmission par exemple, sont également disponibles commercialement et peuvent être utilisés.

Ce dispositif peut être réalisé à différentes longueurs d'ondes optiques notamment à 1.5, 1.3, 0.85 et 0.65 microns.

La longueur de la structure n'est limitée que par les parties électriques. En effet, le composant holographique H permet d'égaler les trajets optique et hyperfréquence, sans pour autant avoir recours à un guidage optique. On peut alors développer un volume d'interaction important autorisant l'incidence de puissance élevée.

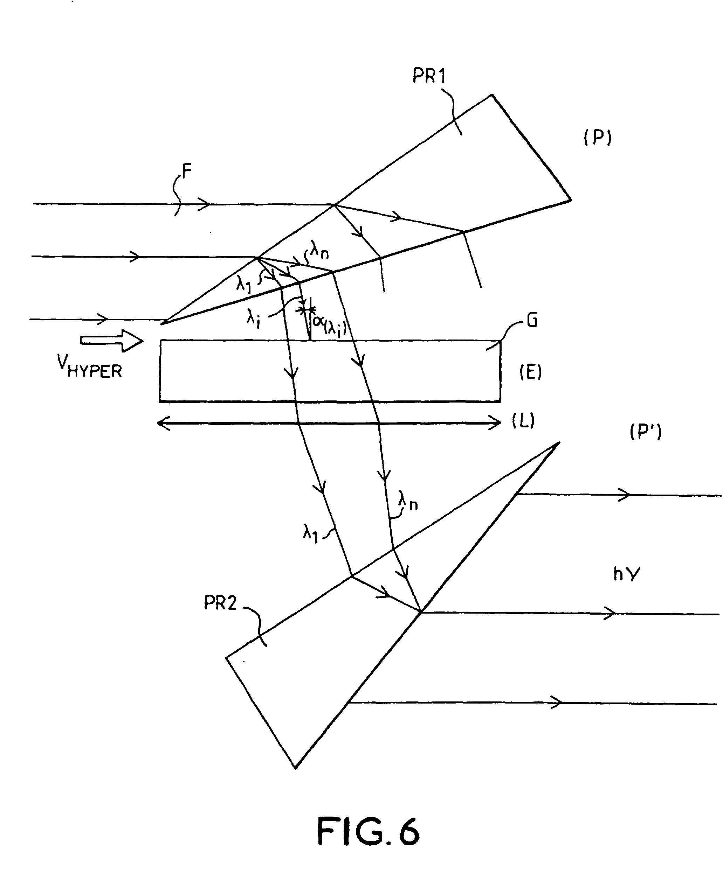

La figure 6 représente un dispositif selon l'invention fonctionnant avec une source laser multi-longueurs d'ondes.

Un premier dispositif de diffraction tel qu'un prisme PR1 reçoit le faisceau incident hυ et réalise une diffraction angulaire des différentes longueurs d'ondes λ1 à λn. Le signal électrique de modulation est également multi-longueurs d'ondes. On associe à chaque fréquence élémentaire fi contenue dans le signal de modulation une longueur d'onde λi telle que l'angle d'incidence α(λi) réalise l'accord des trajets optique et hyperfréquence. La dispersion angulaire réalisée par le prisme PR1 est telle que l'angle d'incidence de chaque longueur d'onde sur le plan du guide G permette de réaliser cet accord des trajets optique et hyperfréquence avec une fréquence de modulation.

Après traversée du guide G par le faisceau optique, une lentille L et un second réseau de diffraction (prisme PR2) reconstruisent un faisceau collimaté. Ce système a permis ainsi de moduler un faisceau présentant une large bande passante.

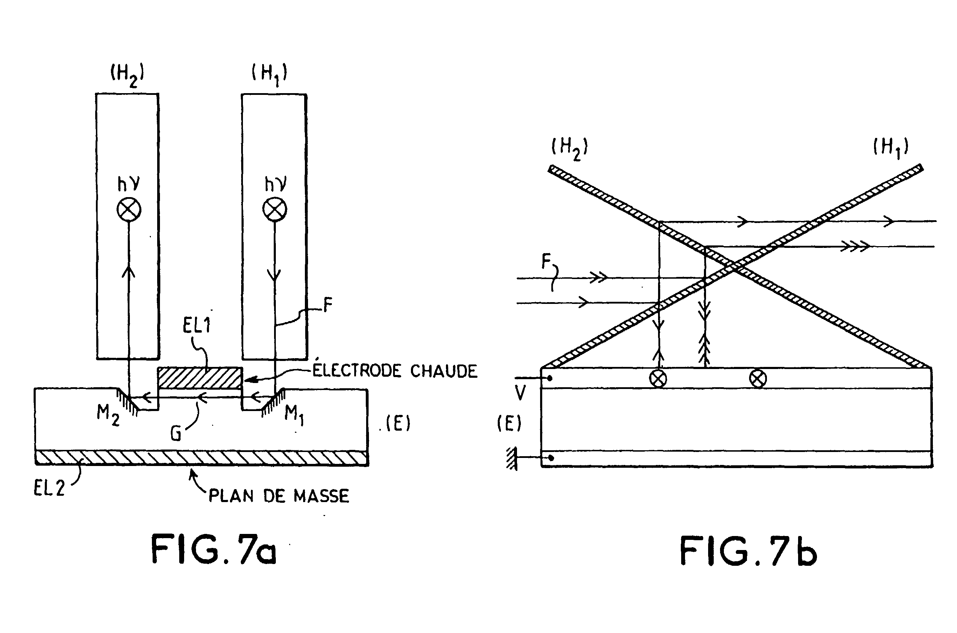

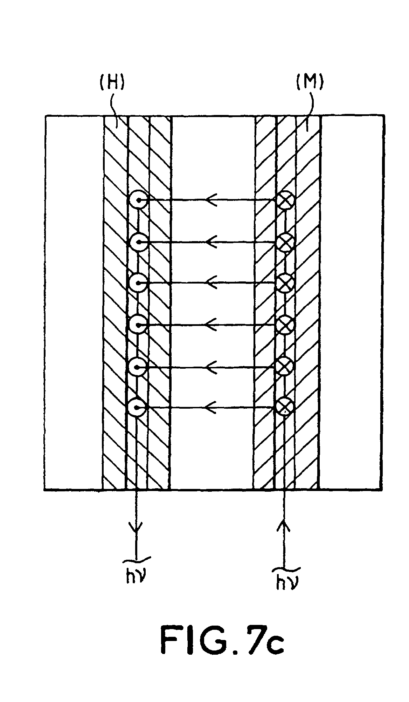

Les figures 7a, 7b, 7c représentent un dispositif dans lequel les électrodes du guide G ne sont pas coplanaires. Le guide G se présente sous forme d'une couche et les électrodes EL1, EL2 sont situées de part et d'autre de cette couche.

Un miroir M1 permet de transmettre un faisceau lumineux incident F selon l'épaisseur du guide G et un miroir M2 permet la sortie du faisceau. Ces miroirs sont disposés parallèlement à la longueur du guide. Ces miroirs, selon l'exemple de la figure 7a, sont réalisés dans la couche du guide G ; ils sont par exemple taillés dans cette couche.

Par ailleurs, un miroir holographique H1, incliné par rapport au plan du miroir M1, reçoit le faisceau incident F. Il étale ce faisceau sur le miroir M1 qui le transmet dans le guide G, la direction d'étalement du faisceau étant ainsi réalisée selon la direction linéaire du guide G.

En sortie du guide G, le faisceau modulé est transmis par le miroir M2 à un deuxième miroir holographique H2 qui réduit à nouveau la section du faisceau et compense les trajets optique et hyperfréquence.

Selon les figures 7a à 7c, le dispositif est réalisé en mésa sur un substrat E présentant deux plans inclinés réfléchissant M1 et M2. Le faisceau incident est progressivement diffracté par H1, puis réfléchi sur le miroir M1. Il est modulé lors de son passage sous l'électrode chaude EL1 puis est dirigé vers le miroir M2 vers le composant holographique H2. Ce dernier, utilisé comme précédemment en transmission, diffracte l'onde et reconstruit le faisceau parallèle au faisceau incident.

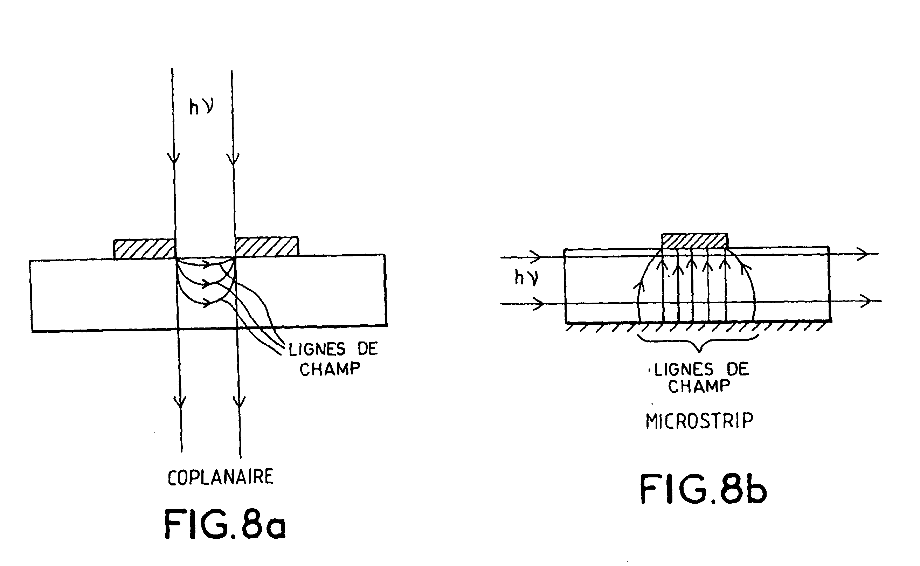

Les figures 8a et 8b représentent les lignes de champ dans les guides réalisés respectivement comme en figure 3a et en figure 7a.

La figure 8a met en évidence que, selon la réalisation de la figure 3a, le faisceau lumineux ne rencontre pas un champ homogène dans le volume du guide. Par contre, ce dispositif est plus simple à réaliser.

La figure 8b met en évidence que selon la réalisation de la figure 7a, le champ est quasiment homogène dans le volume du guide. La modulation est alors plus efficace.

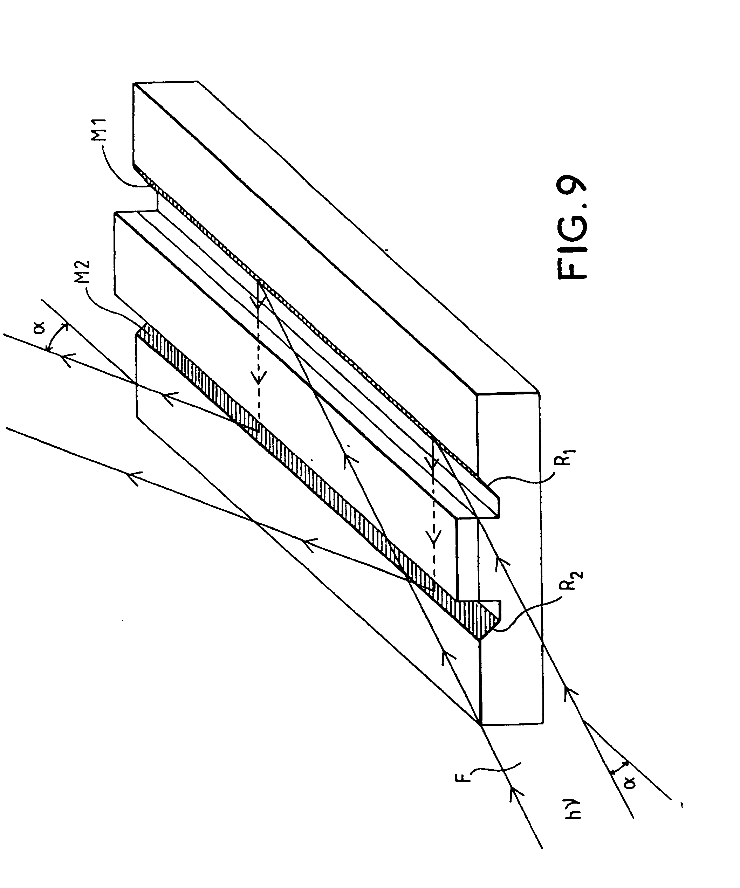

La figure 9 est une variante de réalisation du dispositif des figures 7a à 7c. Selon cette variante, les miroirs M1, M2 intègrent les fonctions holographiques (étalement du faisceau) des miroirs holographiques H1, H2 des figures 7a à 7c. Le faisceau F est incliné par rapport au plan du miroir M1 et n'est pas contenu dans un plan perpendiculaire au plan du miroir M1.

Selon cette forme de réalisation, la structure est donc composée d'un guide hyperfréquence microstrip, et de deux composants holographiques H1 et H2 gravés dans le substrat, dans le même plan que le guide micro-onde. Les conditions d'obtention d'une onde optique modulée uniformément sont similaires à celles développées pour une propagation libre de la lumière. La vitesse de propagation de l'onde optique est toutefois diminuée de l'indice optique du guide.

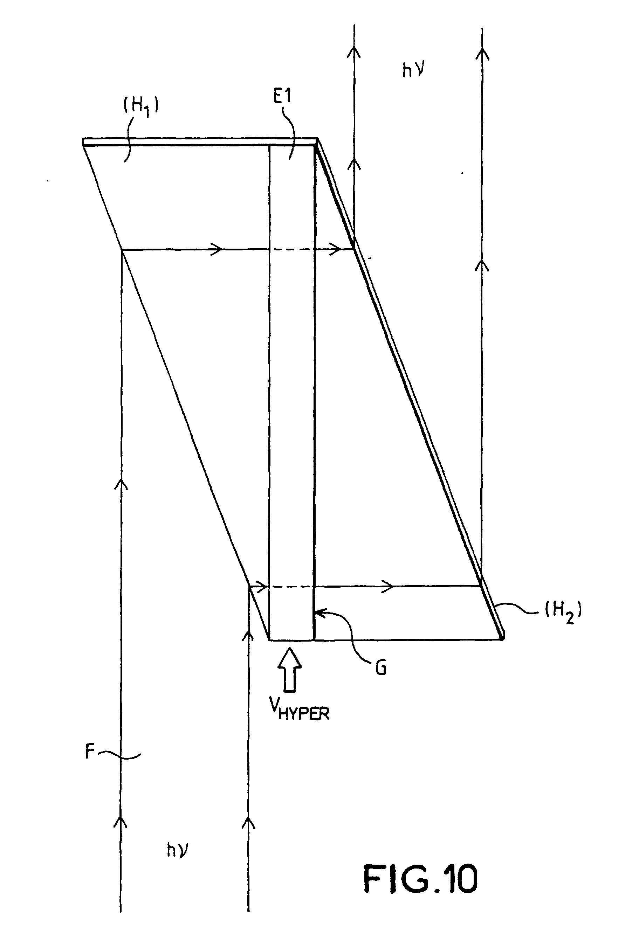

La figure 10 représente une autre variante de réalisation du dispositif de la figure 7a. Ce dispositif est représenté en vue de dessus et on voit en premier plan l'électrode E1. La couche du guide a été découpée de façon à ce que le dispositif présente deux faces inclinées par rapport à la direction longitudinale du guide. Sur ces faces, sont réalisés des dispositifs holographiques H1, H2. Le dispositif holographique H1 reçoit le faisceau incident F et le transmet étalé selon la direction longitudinale du guide G.

Le dispositif holographique H2 est de préférence parallèle et similaire au dispositif holographique H1.

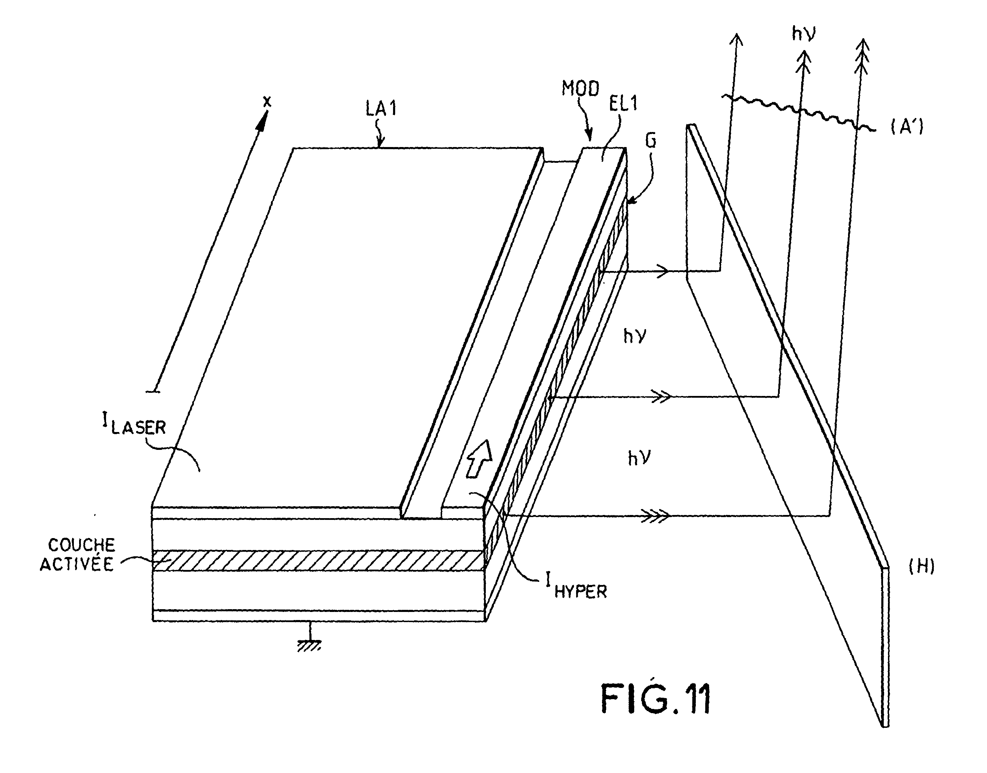

La figure 11 représente l'application de l'invention à la modulation d'un laser. Le laser LA1 est un laser à semiconducteur. Il émet selon le plan de la couche active. Le modulateur MOD est réalisé sur le même dispositif selon la direction d'émission du laser et parallèle à la force d'émission du laser.

Selon l'exemple de réalisation de la figure 11, le laser LA et le modulateur MOD sont réalisés sur le même dispositif semiconducteur, mais ils pourraient être réalisés sous forme de deux dispositifs séparés. Le modulateur MOD possède notamment une électrode EL1 de forme allongée qui définit un guide d'onde hyperfréquence.

Le faisceau émis par le laser LA1 après avoir traversé le modulateur MOD est transmis à un dispositif holographique H qui effectue la compensation des trajets optique et hyperfréquence du modulateur et qui fournit un faisceau collimaté.

Cette forme de réalisation peut être appliquée au laser dit à "gain Levering" (voir références [4] à [6] citées en fin de description). Un tel laser est constitué de deux sections : le laser L1 et le modulateur MOD. Un courant continu I1, appliqué au niveau du laser LA1 assure un gain important de la cavité laser alors que le courant appliqué au modulateur MOD est modulé autour d'une valeur procurant un gain moindre. On met ainsi à profit la non-linéarité du gain en fonction du courant injecté pour moduler efficacement des faisceaux de puissance moyenne.

Selon l'invention, on couple un laser avec un guide hyperfréquence transverse et un composant holographique H (figure 12). On applique un courant continu $I_{laser}$ de fort pompage au laser LA et on propage dans le guide du modulateur MOD le signal de modulation $I_{hyper}$. La lumière issue du laser se trouve progressivement modulée le long des abscisses x croissants. On récupère alors, en interposant un composant diffractif H convenablement orienté, un faisceau large uniformément modulé dans le plan A' et de forte puissance totale.

En distribuant le long d'une cavité laser étendue les densités de puissance optique, cette modulation interne permet d'obtenir un faisceau efficacement modulé et de forte puissance.

REFERENCES CITEES

[1] T.E. Van Eck, L.M. Walpita, W.S.C. Chang, H.H. Wieder "Franz Keldysh electrorefraction and electroabsorption in bulk InP and GaAs", Appl. Phys. Lett. 48, 451-453, 1986.

[2] M. Endo, G. Ghosh, T. Kawakami, T. Iwasaki, "A travelling-wave velocity-matched wideband laser beam modulator", Jpn. J. Appl. Phys. 34, 2235-2337,1995.

[3] D. Dolfi, Th. Merlet, J.P. Huignard, Brevet "Photodétecteur de puissance à ondes progressives", en cours de dépôt.

[4] K.J. Vahala, M.A. Newkirck, T.R. Chen, "The optical gain lever: a novel gain mechanism in the direct modulation of quantum well semiconductors lasers", Appl. Phys. Lett. 54, 2506-2508, 1989.

[5] C.P. Seltzer, L.D. Westbrook, H.J. KWickes, "Improved signal-to-noise ratio in gain-levered in GaAst/InP MQW lasers", Electron. Lett. 29, 230-231, 1993.

[6] K.Y. Lau, J. Quantum Electron. 26, 250, 1990.

**Revendications**

**1.** Modulateur électrooptique de faisceau lumineux, **caractérisé en ce qu'**il comprend :

- un élément (E) en matériau électrooptique comportant deux électrodes (EL1, EL2) définissant dans le matériau électrooptique une zone déterminant un guide d'onde hyperfréquence orienté selon une direction déterminée (x) ;

- des moyens pour transmettre un faisceau lumineux (F) incident dans ladite zone selon une ligne ou bande parallèle à ladite direction (x), c'est à dire tels que le faisceau lumineux (F) se propage dans une direction transverse à la direction déterminée (x);

- des moyens de compensation situés sur le trajet du faisceau lumineux pour compenser les retards de modulation contenus dans le faisceau lumineux par des différences de longueurs de trajets optiques.

**2.** Modulateur électrooptique selon la revendication 1, **caractérisé en ce que** les électrodes (EL1, EL2) sont situées sur une même face de l'élément (E) en matériau électrooptique.

**3.** Modulateur électrooptique selon la revendication 1, **caractérisé en ce que** l'élément (E) en matériau électrooptique est réalisé sous forme d'une couche et que les électrodes sont situées de part et d'autre de cette couche.

**4.** Modulateur électrooptique selon la revendication 1, **caractérisé en ce que** les moyens de compensation comportent un réseau de diffraction en relief ou en volume.

**5.** Modulateur électrooptique selon la revendication 4, **caractérisé en ce que** les moyens de compensation comportent un miroir holographique.

**6.** Modulateur électrooptique selon l'une des revendications 4 ou 5, **caractérisé en ce que** le réseau de diffraction est plan et fait un premier angle θ avec le plan du guide d'onde hyperfréquence, et que le faisceau lumineux à moduler fait un deuxième angle α avec la normale au guide ; le premier angle θ et le deuxième angle α étant liés par la relation :

$$n_{hyper} (1 + \tan\theta \tan\alpha) = n_{opt} (1 + \tan\theta/\cos\alpha),$$

où $n_{hyper}$ représente l'indice hyperfréquence et $n_{opt}$ l'indice de réfraction du milieu.

**7.** Modulateur électrooptique selon l'une des revendications 4 ou 5, **caractérisé en ce qu'**il comporte un réseau de diffraction d'entrée et un réseau de diffraction de sortie.

**8.** Modulateur électrooptique selon l'une des revendications 1 ou 6, **caractérisé en ce que** le faisceau lumineux est large bande et qu'il comporte un dispositif de diffraction transmettant les différentes longueurs d'ondes lumineuses sous des deuxièmes

angles ($\alpha$) différents.

9. Modulateur électrooptique selon la revendication 8, **caractérisé en ce qu'**il comporte :

   - un premier prisme d'entrée (PR1) recevant un faisceau lumineux à traiter et transmettant différentes longueurs d'ondes selon des angles d'incidences différents sur ladite zone de l'élément en matériau électrooptique ;
   - un deuxième prisme de sortie (PR2) recevant le faisceau après traversée de l'élément en matériau électrooptique de façon à rendre parallèle ou colinéaire la propagation des différentes longueurs d'ondes.

10. Modulateur selon la revendication 3, **caractérisé en ce que** le matériau du guide forme une mésa dans un substrat, les flancs de deux rainures situées de part et d'autre de la mésa formant des miroirs permettant l'entrée du faisceau incident selon le plan du guide ainsi que sa sortie et **en ce qu'**au moins un miroir portant un réseau permet l'éclairement du flanc de la rainure d'entrée.

11. Modulateur selon la revendication 3, **caractérisé en ce que** le matériau du guide forme une mésa dans un substrat, les flancs de deux rainures situées de part et d'autre de la mésa formant des miroirs permettant l'entrée du faisceau incident selon le plan du guide ainsi que sa sortie, lesdits flancs portant des réseaux de diffraction et recevant la lumière selon une incidence inclinée de façon à étaler le faisceau selon la longueur du guide.

12. Modulateur selon la revendication 3, **caractérisé en ce qu'**il comporte sur le pourtour de la couche deux faces parallèles et inclinées par rapport à la direction du guide lesdites faces parallèles portant des réseaux de diffraction.

13. Modulateur selon la revendication 3, **caractérisé en ce qu'**il comporte :

   - un laser émettant un pinceau plat de lumière éclairant ledit guide selon sa tranche et selon sa longueur;
   - un réseau de diffraction associé au modulateur pour recevoir la lumière après traversée du modulateur, ce réseau étant incliné par rapport à la face de sortie du modulateur pour compenser les retards de modulation par des différences de longueurs de trajets optiques.

**Patentansprüche**

1. Elektrooptischer Lichtmodulator, **dadurch gekenn-**

**zeichnet, dass** er Folgendes aufweist:

   - ein Element (E) aus elektrooptischem Material, das zwei Elektroden (EL1, EL2) aufweist, die im elektrooptischen Material eine Zone definieren, die einen Mikrowellenleiter definiert, der in einer bestimmten Richtung (x) ausgerichtet ist;
   - Mittel, um einen einfallenden Lichtstrahl (F) gemäß einer Linie oder einem Band parallel zur Richtung (x) in die Zone zu übertragen, d.h. derart, dass der Lichtstrahl (F) sich in einer Richtung quer zur bestimmten Richtung (x) ausbreitet;
   - Kompensationsmittel, die auf dem Weg des Lichtstrahls angeordnet sind, um die im Lichtstrahl enthaltenen Modulationsverzögerungen aufgrund von Lichtweg-Längenunterschieden zu kompensieren.

2. Elektrooptischer Modulator nach Anspruch 1, **dadurch gekennzeichnet, dass** die Elektroden (EL1, EL2) sich auf einer gleichen Seite des Elements (E) aus elektrooptischem Material befinden.

3. Elektrooptischer Modulator nach Anspruch 1, **dadurch gekennzeichnet, dass** das Element (E) aus elektrooptischem Material in Form einer Schicht gebildet ist und dass die Elektroden sich auf beiden Seiten dieser Schicht befinden.

4. Elektrooptischer Modulator nach Anspruch 1, **dadurch gekennzeichnet, dass** die Kompensationsmittel ein Relief- oder Volumen-Beugungsgitter aufweisen.

5. Elektrooptischer Modulator nach Anspruch 4, **dadurch gekennzeichnet, dass** die Kompensationsmittel einen holographischen Spiegel aufweisen.

6. Elektrooptischer Modulator nach Anspruch 4 oder 5, **dadurch gekennzeichnet, dass** das Beugungsgitter eben ist und einen ersten Winkel $\theta$ mit der Ebene des Mikrowellenleiters einschließt und dass der zu modulierende Lichtstrahl einen zweiten Winkel $\alpha$ mit der Senkrechten zum Leiter bildet, wobei der erste Winkel $\theta$ und der zweite Winkel $\alpha$ durch die Beziehung

$$n_{hyper}(1+\tan\theta/\tan\alpha) = n_{opt}(1+\tan\theta/\cos\alpha)$$

verknüpft sind,
wobei $n_{hyper}$ den Mikrowellenindex und $n_{opt}$ den Refraktionsindex des Milieus darstellt.

7. Elektrooptischer Modulator nach Anspruch 4 oder 5, **dadurch gekennzeichnet, dass** er ein Eingangs-Beugungsgitter und ein Ausgangs-Beugungsgitter aufweist.

**8.** Elektrooptischer Modulator nach einem der Ansprüche 1 oder 6, **dadurch gekennzeichnet, dass** der Lichtstrahl breitbandig ist und dass er eine Beugungsvorrichtung aufweist, die die verschiedenen Lichtwellenlängen unter verschiedenen Zweitwinkeln ($\alpha$) überträgt.

**9.** Elektrooptischer Modulator nach Anspruch 8, **dadurch gekennzeichnet, dass** er Folgendes aufweist:

- ein erstes Eingangsprisma (PR1), das einen zu verarbeitenden Lichtstrahl empfängt und verschiedene Wellenlängen gemäß unterschiedlichen Einfallswinkeln auf die Zone des Elements aus elektrooptischem Material überträgt;
- ein zweites Ausgangsprisma (PR2), das den Strahl nach dem Durchqueren des Elements aus elektrooptischem Material empfängt, um den Verlauf der Strahlen mit verschiedenen Wellenlängen parallel oder kollinear zu gestalten.

**10.** Modulator nach Anspruch 3, **dadurch gekennzeichnet, dass** das Material des Wellenleiters einen ebenen Bereich in einem Substrat bildet, wobei die Flanken von zwei Rillen, die sich auf beiden Seiten des Bereichs befinden, Spiegel bilden, die den Eintritt des einfallenden Strahls in der Ebene des Wellenleiters sowie seinen Austritt ermöglichen, und dass mindestens ein Spiegel ein Gitter aufweist, das die Beleuchtung der Flanke der Eingangsrille ermöglicht.

**11.** Modulator nach Anspruch 3, **dadurch gekennzeichnet, dass** das Material des Wellenleiters einen ebenen Bereich in einem Substrat bildet, wobei die Flanken von zwei Rillen, die sich auf beiden Seiten des Bereichs befinden, Spiegel bilden, die den Eintritt des einfallenden Strahls in der Ebene des Wellenleiters sowie seinen Austritt ermöglichen, wobei die Flanken Beugungsgitter aufweisen und das Licht gemäß einem geneigten Einfallwinkel empfangen, um den Strahl gemäß der Länge des Leiters auszubreiten.

**12.** Modulator nach Anspruch 3, **dadurch gekennzeichnet, dass** er auf dem Umfang der Schicht zwei parallele und zur Richtung des Wellenleiters geneigte Flächen aufweist, wobei die parallelen Flächen Beugungsgitter aufweisen.

**13.** Modulator nach Anspruch 3, **dadurch gekennzeichnet, dass** er Folgendes aufweist:

- einen Laser, der ein flaches Lichtbündel aussendet, das den Wellenleiter gemäß seiner Schmalseite und seiner Länge beleuchtet;
- ein dem Modulator zugeordnetes Beugungsgitter, um das Licht nach dem Durchqueren des Modulators zu empfangen, wobei dieses Gitter zur Ausgangsfläche des Modulators geneigt ist, um die Modulationsverzögerungen aufgrund von Unterschieden der Lichtweg-Längen zu kompensieren.

## Claims

**1.** Electrooptic light beam modulator, **characterized in that** it comprises:

- an element (E) made of electrooptic material, comprising two electrodes (EL1, E12) that define, in the electrooptic material, a region defining a microwave waveguide directed along a specified direction (x);
- means for transmitting a light beam (F) incident in the said region along a line or band parallel to the said direction (x), that is to say such that the light beam (F) propagates in a direction transverse to the specified direction (x); and
- compensation means located in the path of the light beam in order to compensate for the modulation delays contained in the light beam caused by differences in optical path lengths.

**2.** Electrooptic modulator according to Claim 1, **characterized in that** the electrodes (EL1, EL2) are located on one and the same face of the element (E) made of electrooptic material.

**3.** Electrooptic modulator according to Claim 1, **characterized in that** the element (E) made of electrooptic material is produced in the form of a layer and **in that** the electrodes are located on either side of this layer.

**4.** Electrooptic modulator according to Claim 1, **characterized in that** the compensation means comprise a relief or volume diffraction grating.

**5.** Electrooptic modulator according to Claim 4, **characterized in that** the compensation means comprise a holographic mirror.

**6.** Electrooptic modulator according to either of Claims 4 and 5, **characterized in that** the diffraction grating is planar and makes a first angle $\theta$ with the plane of the microwave waveguide and **in that** the light beam to be modulated makes a second angle $\alpha$ with the normal to the waveguide, the first angle $\theta$ and the second angle $\alpha$ being linked by the equation:

$$n_{micro}(1 + \tan\theta/\tan\alpha) = n_{opt}(1 + \tan\theta/\cos\alpha),$$

where $n_{micro}$ represents the microwave index and $n_{opt}$ the refractive index of the medium.

7. Electrooptic modulator according to either of Claims 4 and 5, **characterized in that** it comprises an entry diffraction grating and an exit diffraction grating.

8. Electrooptic modulator according to either of Claims 1 and 6, **characterized in that** the light beam is a broadband light beam and **in that** the modulator comprises a diffraction device transmitting the various light wavelengths at different second angles ($\alpha$).

9. Electrooptic modulator according to Claim 8, **characterized in that** it comprises:

    - an entry first prism (PR1) that receives a light beam to be treated and transmits various wavelengths at different angles of incidence in the said region of the element made of electrooptic material; and
    - an exit second prism (PR2) that receives the beam after it has passed through the element made of electroptic material so as to make it parallel to or collinear with the propagation of the various wavelengths.

10. Modulator according to Claim 3, **characterized in that** the material of the waveguide forms a mesa in a substrate, the sidewalls of two grooves located on either side of the mesa forming mirrors that allow the incident beam to enter in the plane of the waveguide and to exit therefrom and **in that** at least one mirror carrying a grating allows the sidewall of the entry groove to be illuminated.

11. Modulator according to Claim 3, **characterized in that** the material of the waveguide forms a mesa in a substrate, the sidewalls of two grooves located on either side of the mesa forming mirrors allowing the incident beam to enter in the plane of the guide and to exit therefrom, the said sidewalls carrying diffracting gratings and receiving the light at an inclined angle of incidence so as to spread the beam over the length of the waveguide.

12. Modulator according to Claim 3, **characterized in that** it comprises, around the perimeter of the layer, two parallel faces that are inclined to the direction of the waveguide, the said parallel faces carrying diffraction gratings.

13. Modulator according to Claim 3, **characterized in that** it comprises:

    - a laser emitting a flat light brush that illuminates the said waveguide on its edge and along its length; and
    - a diffraction grating associated with the modulator in order to receive the light after it has passed through the modulator, this grating being inclined to the exit face of the modulator in order to compensate for the modulation delays caused by differences in optical path lengths.

$h\nu$

$V_{HYPER} + V_{\Pi}$

ÉLECTRODES
TRANSPARENTES

$h$

# FIG.1

$V_{HYPER} + V_{\Pi}$

$h\nu$
ENTRÉE

$e$

SORTIE

$l$

# FIG.2

FIG.3a

FIG.3b

FIG.4

EP 0 849 620 B1

FIG.5a

FIG.5b

FIG.6

**FIG.7a**

**FIG.7b**

EP 0 849 620 B1

FIG.7c

LIGNES DE CHAMP

MICROSTRIP

FIG.8b

hν

hν

LIGNES DE CHAMP

COPLANAIRE

FIG.8a

FIG.9

FIG.10

FIG.11

EP 0 849 620 B1